# EUROPEAN PATENT SPECIFICATION

(11) **EP 1 183 945 B1**
(45) Date of publication and mention of the grant of the patent: **02.02.2005**
(21) Application number: 00118602.2
(22) Date of filing: 28.08.2000
(51) Int. Cl.: A01K 87/00, A01K 91/00

(54) **Extendible cord**
Ausdehnbarers Seil
Cordon extensible

(43) Date of publication of application: 06.03.2002
(73) Proprietor: Harness, Paul Michael, Marlow, Bucks SL7 3HR (GB); Hughes, Michael, Bracknell, Berks RG12 0TD (GB); Gould, Simon, Hants, GU34 2HL (GB)
(72) Inventor: Harness, Paul Michael, Marlow, Bucks SL7 3HR (GB); Hughes, Michael, Bracknell, Berks RG12 0TD (GB); Gould, Simon, Hants, GU34 2HL (GB)
(74) Representative: Pike, Christopher Gerard

(56) References cited:
- FR-A- 855 856
- FR-A- 2 536 956
- GB-A- 2 110 511
- US-A- 4 133 623
- US-A- 5 515 638

## Description

The present invention is in the field of extendible cords see GB-A-2 110 511 for use in fishing rods, particularly extendible pole fishing rods see FR-A-2 536 956 comprising plural tubular rod sections in telescopic series with one another.

### Background to the Invention

Fishing rods comprising plural tubular rod sections in telescopic series with one another are known in the art. Such rods are sometimes called fishing poles. The fishing line with hook and bait attached is generally fixed onto the end of the pole and the pole is extended over the area of river or lake to be fished.

In developments of the basic fishing pole, the end-section (or end-unit) thereof is provided with an elastication system comprising an internally threaded elastic cord. One end of the cord is fixed to an anchor point within one of the tubular rod sections (generally the penultimate section) and the cord is threaded through to protrude from the tip-rod section. In this case, the fishing line with hook and bait is fixed to the protruding cord.

In the above-described development, when a fish initially bites at the bait, the extendible cord takes up the 'shock' associated with this initial bite. Damping of the 'shock' is advantageous in that it reduces the chance of causing alarm to the fish until it has taken the full bait and been securely hooked.

Prior art extendible cords used for this purpose comprise solid rubber material. The Applicants have now found that improved performance may be achievable if a cord in the form of a hollow latex tube comprising a filler material therein is used. The hollow latex tube has the particular advantage that it doesn't 'bottom out' too readily, and thus acts as a better absorber for the 'shock' of the initial fish bite. The use of the filler material provides the added advantage that it acts to prevent the hollow cord flattening out when extended, thereby improving the stretch capability of the cord and its performance as an absorber for the 'shock' of the initial fish bite.

### Summary of the Invention

According to one aspect of the present invention there is provided an extendible cord for use in an elastication system for a fishing rod comprising a hollow tube comprising latex material; a seal at each end of said hollow tube; and a filler material within the hollow tube.

The filler material fills at least part of the hollow or void part of the hollow tube. The filler material acts such as to provide an internal structure for the void or hollow of the tube to make it less susceptible to flattening out when extended (e.g. when extended by pulling on opposing ends of the tube).

The seal may comprise any suitable seal including heat seals, adhesive seals and mechanical seals such as a pinch seal or a knot in the tube. Preferably, either or both seals comprise a knot in the tube.

Suitably, the filler material comprises a fluid. The fluid nature of the filler material makes filling the hollow tube more straightforward from a manufacturing process standpoint. Embodiments are envisaged where the filler is fluid on filling, but then sets to form a solid structure, such as a cellular or honeycomb structure.

Suitably, the filler material comprises a lubricant. Suitably, the lubricant comprises an oil. The oil may be derived from any suitable sources including petrochemical sources, animal sources and vegetable sources. Preferably, the oil is vegetable-based such as a palm, coconut, sunflower, safflower or olive oilbased product. Other suitable oils include those based on silicone oil.

Suitably, the hollow tube has an external diameter of from 0.5 to 5mm. Preferably, the external diameter is from 1 to 3mm.

Suitably, the hollow tube has a wall thickness of from 0.05 to 1mm. Preferably, the hollow tube has a wall thickness of from 0.1 to 0.5mm.

The hollow tube comprises a latex material. The latex material is typically naturally derived. The latex is typically biocompatible.

The hollow tube is typically of high extensibility. Suitably, the hollow tube has an extensibility of from 50 to 750%. That is to say it can be extended by a factor of from 50 to 750% before it breaks.

An exemplary hollow tube herein is made of natural latex and has an external diameter of 2.5mm, an internal diameter of 2mm and a wall thickness of 0.25mm. The tube has the following properties: Tensile PSI 3500 minimum; elongation at break (%) 750 minimum; modulus PSI at 100% 120 maximum; durometer hardness Shore A scale 35 ± 5; and specific gravity 0.95. The material typically exceeds US Federal Specifications ZZ-T-831D, Amendment Four, Types I, II, III, IV and V; Class 1, Class 2 and Class 3 translucent and black; and Military Specification MIL-T-36966.

According to another aspect of the present invention there is provided a method of making an extendible cord for use in an elastication system for a fishing rod comprising obtaining a hollow tube comprising latex material; sealing a first end of the hollow tube; filling at least part of the hollow tube with a filler material; and sealing a second end of the at least part-filled hollow tube.

Suitably, said sealing involves forming a knot in each of the first and second ends of the tube.

Suitably, said filling involves pump or syringe filling at least part of the hollow tube.

Embodiments are envisaged in kit form comprising a hollow tube comprising latex material and a filler material therefor. Instructions for filling the tube may be included as part of the kit, as may a means of filling the tube with the filler material such as a syringe or pump filler.

According to a further aspect of the present invention there is provided a fishing rod or pole comprising plural tapering hollow tubular rod sections in telescopic series; within at least one of said hollow tubular rod sections, an anchor point for internally attaching an extendible cord thereto; and attachable to said anchor point, an extendible cord of sufficient length to be threadable to protrude from the end of the narrowest rod section. The extendible cord is in the form as described above.

In use, the cord is thus attached to the anchor point and threaded through to the end of the narrowest rod section (the tip-section) from which it protrudes. A knot or some other stop means may be provided to the protruding end of the cord to ensure that it constantly protrudes from the end-section. The cord may be placed under slight tension. A fishing line can then be attached to the cord e.g. by tying the fishing line to the end of the cord.

Suitably, the anchor point is within the rod section neighbouring the narrowest rod section (i.e. the end-section) in the telescopic series. The anchor point can be of any suitable shape and may be moulded as part of the rod section or be applied thereto by any suitable means.

The rod sections are made of a material which is both flexible and of high strength. Suitably, the rod sections comprise a carbon graphite material. Optionally, reinforcing agents can also be added such as Kevlar (trade name).

According to a further aspect of the present invention there is provided an end-unit for a fishing rod comprising a tapering hollow tubular mid-rod section; in telescopic series with said mid-rod section, a tapering hollow tubular tip-rod section; within said mid-rod section, an anchor point for internally attaching an extendible cord thereto; and attached to said anchor point, an extendible cord of sufficient length to be threadable to protrude from the tip-rod section. The extendible cord is in the form as described above.

The end-unit may be sold separately from the entire rod or as a kit of parts comprising the end-unit and at least one further hollow tubular rod section which forms a telescopic extension thereto.

In another aspect herein the cord is a solid (i.e. non-tubular) latex cord.

According to a further aspect of the present invention there is provided the use of a hollow extendible cord in an elastication system for a fishing rod, the fishing rod comprising plural tapering hollow tubular rod sections in telescopic series (i.e. an extendible fishing pole).

According to a still further aspect of the present invention there is provided a method of adding an elastication system to a fishing rod comprising plural tapering hollow tubular rod sections in telescopic series, said method comprising attaching an extendible cord to an anchor point within at least one of said hollow tubular rod sections; and threading said extendible cord to protrude from the end of the narrowest rod section. The extendible cord is in the form as described above.

### Brief description of the drawings

Preferred embodiments of the present invention will now be described with reference to the accompanying drawing in which:
Figure 1. shows a sectional view of a fishing rod according to the present invention; and
Figure 2 shows a sectional view of a filled hollow tubular cord for use in accord with the present invention.

### Detailed description of the invention

The present invention is here described by means of examples, which constitute possible embodiments of the invention.

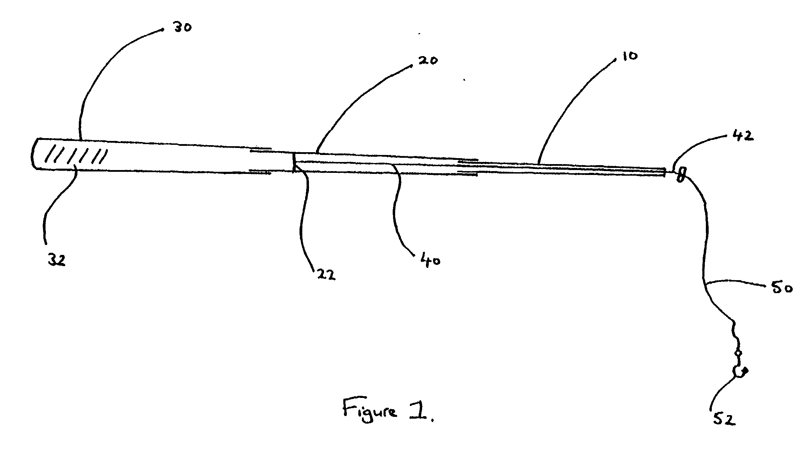

Figure 1. shows a fishing rod herein comprising a tapered hollow tubular tip-section 10, in telescopic engagement with a tapered hollow tubular mid-section 20, which in turn telescopically engages a tapered hollow handle-section 30. The handle-section has grip features 32 for ease of grip in the hand.

Whilst, for simplicity the rod as shown has only three tapered rod sections in telescopic series it may be appreciated that further rod sections may also be present. Typically from four to ten rod-sections are present and the rod has an overall length of from 5 to 10 metres.

The mid-section 20 is provided with an anchor point 22 to which the end of a slightly tensioned extendible cord 40 is attached. The cord is threaded through the interior of the mid-section 20 and tip-section such that the other end of the cord 40 protrudes from the narrow end of the tip-section 10. A knot 42 is provided at the far end of the cord 40 to ensure that the cord 40 constantly protrudes (i.e. to stop is being pulled back within the rod sections 10, 20). A fishing line 50 with hook 52 is attached to the cord.

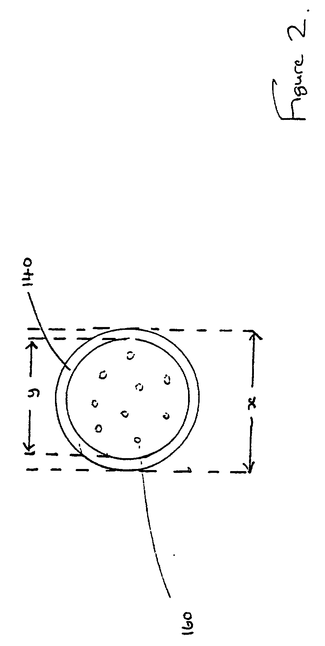

Figure 2 shows a sectional view of a hollow tubular cord 140 herein comprised of a latex material and suitable for use in a fishing rod as shown in Figure 1. The external diameter of the tube y is 2.5mm and the internal diameter is 2mm. The wall thickness is thus 0.25mm. The interior of the hollow tube is filled with a filler material 160 comprising a vegetable-based lubricant oil. The ends of the tube are sealed by knotting (not shown) such that the lubricant oil is contained within the sealed tube.

## Claims

1. An extendible cord (40) for use in an elastication system for a fishing rod comprising
a hollow tube (140) comprising latex material;
a seal at each end of said hollow tube; and
a filler material (160) within the hollow tube.

2. An extendible cord according to claim 1, wherein each seal comprises a knot in the tube.

3. An extendible cord according to either of claims 1 or 2, wherein said filler material comprises a fluid.

4. An extendible cord according to any of claims 1 to 3, wherein the filler material comprises a lubricant.

5. An extendible cord according to claim 4 wherein the lubricant comprises an oil.

6. An extendible cord according to claim 5, wherein said oil is vegetable-based.

7. An extendible cord according to any of claims 1 to 6, wherein the hollow tube has an external diameter of from 0.5 to 5mm.

8. An extendible cord according to any of claims 1 to 7, wherein the hollow tube has a wall thickness of from 0.05 to 1mm.

9. An extendible cord according to any of claims 1 to 8, wherein the hollow tube has an extensibility of from 50 to 750%.

10. A method of making an extendible cord for use in an elastication system for a fishing rod comprising obtaining a hollow tube comprising latex material;
sealing a first end of the hollow tube;
filling at least part of the hollow tube with a filler material; and
sealing a second end of the at least part-filled hollow tube.

11. Method of making an extendible cord according to claim 10, wherein said sealing involves forming a knot in the first and second ends of the tube.

12. Method of making an extendible cord according to claims 10 or 11, wherein said filling involves syringe filling at least part of the hollow tube.

13. A fishing rod comprising
plural tapering hollow tubular rod sections (10, 20, 30) in telescopic series;
within at least one of said hollow tubular rod sections, an anchor point (22) for internally attaching an extendible cord thereto; and
attached to said anchor point, an extendible cord of sufficient length to be threadable to protrude from the end of the narrowest rod section,
wherein said extendible cord is according to any of claims 1 to 9.

14. A fishing rod according to claim 13, wherein the anchor point is within the rod section neighbouring the narrowest rod section in the telescopic series.

15. A fishing rod according to claim 14, wherein the rod sections comprise a carbon graphite material.

16. An end-unit for a fishing rod comprising
a tapering hollow tubular mid-rod section;
in telescopic series with said mid-rod section, a tapering hollow tubular tip-rod section;
within said mid-rod section, an anchor point for internally attaching an extendible cord thereto; and
attached to said anchor point, an extendible cord of sufficient length to be threadable to protrude from the tip-rod section,
wherein said extendible cord is according to any of claims 1 to 9.

17. Kit of parts comprising the end-unit for a fishing rod of claim 16 and at least one further hollow tubular rod section to form a telescopic extension thereto.

18. Use of a hollow extendible cord according to any of claims 1 to 9 in an elastication system for a fishing rod comprising plural tapering hollow tubular rod sections in telescopic series.

19. Method of adding an elastication system to a fishing rod comprising plural tapering hollow tubular rod sections in telescopic series, said method comprising
attaching an extendible cord to an anchor point within at least one of said hollow tubular rod sections; and
threading said extendible cord to protrude from the end of the narrowest rod section,
wherein said extendible cord is according to any of claims 1 to 9.

## Patentansprüche

1. Ausdehnbare Schnur (40) zur Verwendung in einem Elastizierungssystem (elastication system) für eine Angelrute, umfassend
eine Latexmaterial umfassende hohle Röhre (140);
eine Abdichtung an jedem Ende der hohlen Röhre; und
ein Füllmaterial (160) innerhalb der hohlen Röhre.

2. Ausdehnbare Schnur gemäß Anspruch 1, wobei jede Abdichtung eine Schlinge in der Röhre umfasst.

3. Ausdehnbare Schnur gemäß Anspruch 1 oder 2, wobei das Füllmaterial eine Flüssigkeit umfasst.

4. Ausdehnbare Schnur gemäß einem der Ansprüche 1 bis 3, wobei das Füllmaterial ein Schmiermittel umfasst.

5. Ausdehnbare Schnur gemäß Anspruch 4, wobei das Schmiermittel ein Öl umfasst.

6. Ausdehnbare Schnur gemäß Anspruch 5, wobei das Öl auf Pflanzenbasis ist.

7. Ausdehnbare Schnur gemäß einem der Ansprüche 1 bis 6, wobei die hohle Röhre einen äußeren Durchmesser von 0,5 bis 5mm aufweist.

8. Ausdehnbare Schnur gemäß einem der Ansprüche 1 bis 7, wobei die hohle Röhre eine Wanddicke von 0,05 bis 1mm aufweist.

9. Ausdehnbare Schnur gemäß einem der Ansprüche 1 bis 8, wobei die hohle Röhre eine Ausdehnbarkeit von 50 bis 750% aufweist.

10. Verfahren zum Herstellen einer ausdehnbaren Schnur für die Verwendung in einem Elastizierungssystem (elastication system) für eine Angelrute, umfassend
die Beschaffung einer Latexmaterial umfassenden hohlen Röhre;
das Abdichten eines ersten Endes der hohlen Röhre;
das Befüllen zumindest eines Teils der hohlen Röhre mit einem Füllmaterial; und
das Abdichten eines zweiten Endes der zumindest zum Teil gefüllten hohlen Röhre.

11. Verfahren zum Erzeugen einer ausdehnbaren Schnur gemäß Anspruch 10, wobei das Abdichten das Ausformen einer Schlinge in den ersten und zweiten Enden der Röhre einschließt.

12. Verfahren zum Erzeugen einer ausdehnbaren Schnur gemäß der Ansprüche 10 oder 11, wobei das Befüllen das Befüllen zumindest eines Teils der hohlen Röhre mit einer Spritze einschließt.

13. Angelrute, umfassend
eine in Teleskop-Reihenfolge angeordnete Vielzahl von sich verjüngenden, röhrenförmigen Rutenabschnitten (10, 20, 30) ;
einen Verankerungspunkt (22) innerhalb zumindest eines der hohlen, röhrenförmigen Rutenabschnitte zum internen Anbringen einer ausdehnbaren Schnur daran; und
eine an dem Verankerungspunkt angebrachte ausdehnbare Schnur von ausreichender Länge, um einfädelbar zu sein und aus dem Ende des engsten Rutenabschnitts hervorzustehen,
wobei die ausdehnbare Schnur eine Schnur gemäß einem der Ansprüche 1 bis 9 ist.

14. Angelrute gemäß Anspruch 13, wobei der Verankerungspunkt innerhalb des Rutenabschnitts, der dem engsten Routenabschnitt in der Teleskop-Reihenfolge benachbart ist vorliegt.

15. Angelrute gemäß Anspruch 14, wobei die Rutenabschnitte ein Kohlenstoff-Graphitmaterial umfassen.

16. Endeinheit für eine Angelrute, umfassend
einen sich verjüngenden, hohlen, röhrenförmigen Mittel-Rutenabschnitt;
einen sich verjüngenden, hohlen, röhrenförmigen Spitzen-Rutenabschnitt in Teleskop-Reihenfolge mit dem Mittel-Rutenabschnitt;
einen Verankerungspunkt zum internen Anbringen einer ausdehnbaren Schnur daran innerhalb des Mittel-Rutenabschnitts; und
eine an dem Verankerungspunkt angebrachte ausdehnbare Schnur einer ausreichenden Länge, um einfädelbar zu sein, um aus dem Spitzen-Rutenabschnitt hervorzustehen,
wobei die ausdehnbare Schnur eine Schnur gemäß einem der Ansprüche 1 bis 9 ist.

17. Bausatz von Teilen, umfassend die Endeinheit für eine Angelrute gemäß Anspruch 16 und zumindest einen weiteren, hohlen, röhrenförmigen Rutenabschnitt, um eine Teleskop-Verlängerung daran auszubilden.

18. Verwendung einer hohlen, ausdehnbaren Schnur gemäß einem der Ansprüche 1 bis 9 in einem elastischen System für eine Angelrute, umfassend eine Vielzahl von sich verjüngenden, hohlen, röhrenförmigen Rutenabschnitten in Teleskop-Reihenfolge.

19. Verfahren zum Anfügen eines Elastischen Systems an einer Angelrute, umfassend eine Vielzahl von sich verjüngenden, hohlen, röhrenförmigen Rutenabschnitten in Teleskop-Reihenfolge, wobei das Verfahren umfasst
das Anbringen einer ausdehnbaren Schnur an einem Verankerungspunkt innerhalb zumindest einer der hohlen, röhrenförmigen Rutenabschnitte; und
das Einfädeln der ausdehnbaren Schnur, um aus dem Ende des engsten Rutenabschnitts hervorzustehen,
wobei die ausdehnbare Schnur eine Schnur gemäß einem der Ansprüche 1 bis 9 ist.

## Revendications

1. Cordon extensible (40) pour une utilisation dans un système de réponse élastique pour canne à pêche, constitué de :
un tube creux (140) comprenant du latex ;
un joint d'étanchéité à chaque extrémité dudit tube creux ; et
un matériau de remplissage (160) à l'intérieur dudit tube creux.

2. Cordon extensible selon la revendication 1, dans lequel chaque joint comprend un noeud à l'intérieur du tube.

3. Cordon extensible selon l'une quelconque des revendications 1 ou 2, dans lequel ledit matériau de remplissage comprend un fluide.

4. Cordon extensible selon l'une quelconque des revendications 1 à 3, dans lequel le matériau de remplissage comprend un lubrifiant.

5. Cordon extensible selon la revendication 4, dans lequel le lubrifiant comprend de l'huile.

6. Cordon extensible selon la revendication 5, dans lequel ladite huile est à base d'huile végétale.

7. Cordon extensible selon l'une quelconque des revendications 1 à 6, dans lequel le tube creux a un diamètre extérieur compris entre 0,5 et 5 mm.

8. Cordon extensible selon l'une quelconque des revendications 1 à 7, dans lequel le tube creux a une épaisseur de paroi comprise entre 0,05 et 1 mm.

9. Cordon extensible selon l'une quelconque des revendications 1 à 8, dans lequel le tube creux a une extensibilité comprise entre 50 et 750%.

10. Procédé de réalisation d'un cordon extensible pour une utilisation dans un système de réponse élastique pour canne à pêche, comprenant :
la réalisation d'un tube creux comprenant du latex ;
l'étanchéisation d'une première extrémité du tube creux ;
le remplissage d'au moins une partie du tube creux avec un matériau de remplissage ; et
l'étanchéisation d'une seconde extrémité du tube creux au moins partiellement rempli.

11. Procédé de réalisation d'un cordon extensible selon la revendication 10, dans lequel ladite étanchéisation implique la formation d'un noeud aux première et seconde extrémités du tube.

12. Procédé de réalisation d'un cordon extensible selon les revendications 10 ou 11, dans lequel ledit remplissage implique le remplissage à l'aide s'une seringue d'au moins une partie du tube creux.

13. Canne à pêche comprenant :
une pluralité de tronçons de canne tubulaires creux (10, 20, 30) à sections décroissantes et formant une série télescopique ;
à l'intérieur d'au moins un desdits tronçons de canne tubulaires creux, un point d'ancrage (22) pour y attacher un cordon extensible en partie interne ; et
attaché audit point d'ancrage, un cordon extensible de longueur suffisante pour être enfilable jusqu'à sortir de l'extrémité du tronçon de canne le plus étroit,
dans laquelle ledit cordon extensible est conforme à l'une quelconque des revendications 1 à 9.

14. Canne à pêche selon la revendication 13, dans laquelle le point d'ancrage est situé à l'intérieur du tronçon de canne jouxtant le tronçon de canne le plus étroit dans la série télescopique.

15. Canne à pêche selon la revendication 14, dans laquelle les tronçons de canne comprennent du graphite.

16. Elément d'extrémité pour canne à pêche comprenant :
un tronçon de milieu de canne, tubulaire, creux et à section décroissante ;
un tronçon d'extrémité de canne, tubulaire, creux et à section décroissante, assemblé de manière télescopique avec ledit tronçon de milieu de canne ;
un point d'ancrage, situé à l'intérieur dudit tronçon de milieu de canne, pour y attacher un cordon extensible en partie interne ; et
fixé au dit point d'ancrage, un cordon extensible de longueur suffisante pour être enfilable jusqu'à sortir de l'extrémité du tronçon de canne le plus étroit,
dans laquelle ledit cordon extensible est conforme à l'une quelconque des revendications 1 à 9.

17. Kit de pièces comprenant l'élément d'extrémité pour canne à pêche selon la revendication 16 et au moins un autre tronçon de canne tubulaire creux pour former une extension télescopique à ce dernier.

18. Utilisation d'un cordon extensible creux selon l'une quelconque des revendications 1 à 9 dans un système de réponse élastique pour canne à pêche, comprenant une pluralité de tronçons de canne tubulaires creux à sections décroissantes et formant une série télescopique.

19. Procédé pour ajouter un système de réponse élastique à une canne à pêche, comprenant une pluralité de tronçons de canne tubulaires creux à sections décroissantes et formant une série télescopique, ledit procédé comprenant :
la fixation d'un cordon extensible à un point d'ancrage à l'intérieur d'au moins un desdits tronçons de canne tubulaires ; et
l'enfilage dudit cordon extensible jusqu'à sortir de l'extrémité du tronçon de canne le plus étroit,
dans lequel ledit cordon extensible est conforme à l'une quelconque des revendications 1 à 9.
